# FASCICULE DE BREVET EUROPEEN

(11) **EP 3 931 070 B1**
(45) Date de publication et mention de la délivrance du brevet: **08.11.2023**
(21) Numéro de dépôt: 20706275.3
(22) Date de dépôt: 25.02.2020
(51) Int. Cl.: B62J 6/057, B62J 6/24, B62J 50/22, B62K 21/26

(54) **POIGNEE AVEC DISPOSITIF INDICATEUR DE CHANGEMENT DE DIRECTION RETRACTABLE**
GRIFF MIT EINZIEHBAREM BLINKER
GRIP WITH RETRACTABLE DIRECTION INDICATOR

(30) Priorité: 26.02.2019 FR 1901959
(43) Date de publication de la demande: 05.01.2022
(73) Titulaire: ELLIOP, 13009 Marseille (FR)
(72) Inventeur: VICENTE, Jean-François, 45700 LOMBREUIL (FR); LORIDANT, Inès, 92330 SCEAUX (FR); DE CEROU, Pierre, 13009 MARSEILLE (FR)
(74) Mandataire: IP Trust
(86) Numéro de dépôt international: PCT/EP2020/054940
(87) Numéro de publication internationale: WO 2020/173959

(56) Documents cités:
- WO-A2-2017/149373
- CN-U- 201 808 618
- JP-U- S53 149 580
- KR-A- 20170 004 801
- KR-B1- 101 406 282
- TW-U- M 353 142
- US-A1- 2004 207 520

## Description

### Domaine de l'invention

La présente invention concerne le domaine des équipements de sécurité pour des cycles munis d'un guidon ou dispositif de mobilités, et plus particulièrement les aménagements des dispositifs de signalisation optique et sonore pour les cycles ou équipements de mobilités tels que des bâtons de randonnée ou de marche.

Elle concerne notamment un dispositif de signalement de changement de direction pour vélos, trottinette, scooter et plus généralement tout engin de mobilité, notamment de mobilité urbaine, dans le but d'indiquer aux autres usagers les intentions de modification de trajet ou virage vers la droite ou la gauche et/ou la position. Il est habituellement admis que tout cycliste effectuant un changement de direction signale son intention en tendant le bras latéralement, amputant ainsi de 50 % son équilibre puisqu'il ne maintient plus son guidon que d'une seule main. De plus, cette action n'est pas toujours bien perçue des autres usagers, particulièrement la nuit, par manque évident de repaire lumineux.

Le dispositif permet au cycliste en agissant sur une commande installée au guidon, de signaler son intention de changement de direction tout en renforçant la sécurité ainsi que la maîtrise de conduite par le maintien des deux mains sur le guidon.

### État de la technique

On connait dans l'état de la technique de nombreuses solutions se présentant sous la forme de poignées actives.

La demande de brevet coréen KR101406282B1, qui présente les caractéristiques du préambule de la revendication 1, décrit une lampe indicatrice de direction pour une bicyclette pouvant être fixée ou fixée de manière amovible à une partie d'extrémité d'un guidon, remplissant une fonction de lampe indicatrice de direction, une fonction d'éclairage avant ou une fonction de freinage, ou une LED installée sur le guidon.

La demande de modèle d'utilité chinois CN201808618 décrit un système de guidage et un vélo qui se compose d'un module de commande constitué par une unité de détection et d'un émetteur radiofréquence, l'unité de détection est utilisée pour détecter le mouvement du vélo et générer une commande en fonction du mouvement, et l'émetteur radiofréquence peut transmettre un signal radiofréquence selon la commande. Un second module se compose d'un récepteur radiofréquence et d'une unité de signalisation, le récepteur radiofréquence peut recevoir le signal radiofréquence, et l'unité de signalisation peut générer un signal d'invite dynamique en fonction du signal radiofréquence pour marquer le mouvement du vélo. Le système de signalisation effectue la connexion du signal dans la transmission par radiofréquence au lieu de la connexion de ligne complexe, par conséquent, le système de guidage peut être agencé sur le vélo par un utilisateur lui-même; et simultanément, le système de signalisation peut générer divers signaux de signalisation dynamiques avec différentes fonctions par commande de transmission par radiofréquence.

La demande de brevet internationale WO2017149373 concerne un casque de cycliste avec un affichage automatique de freinage et de changement de direction, qui comprend un corps de casque sur lesquels sont montés latéralement devant et derrière un clignotant gauche et un clignotant droit. Le casque de cycliste comporte en plus un module de commande, ceux qui sont branchés électriquement les clignotants, et un module de réception sans fil qui est raccordé au module de commande. Ledit casque comprend en outre un module de télécommande sans fil qui communique avec le module de réception sans fil par ondes radioélectriques. Une unité de vérification des freins et une unité de commande manuelle sont raccordées électriquement au module de télécommande sans fil. L'unité de vérification des freins en cas d'activation d'un frein de roue et de l'unité de commande manuelle en cas d'actionnement d'un interrupteur de clignotant génèrent un signal correspondant qui est transmis par le biais du module de la télécommande sans fil au casque pour commandant les clignotants. Par conséquent, le cycliste peut donner une information correspondante aux véhicules le suivant. De cette façon, la sécurité du cycliste est augmentée.

La demande de brevet américaine US2004207520 décrit un clignotant à installer sur un vélo avec une poignée, le clignotant comprenant :
- un dispositif de transmission attaché à la poignée pour transmettre un signal sans fil;
- un dispositif de réception attaché au vélo pour recevoir le signal sans fil; et
- une lumière connectée électriquement au dispositif récepteur pour signaler une intention de faire tourner le vélo.

La demande de brevet TWM353142 concerne un accessoire de vélo, et plus particulièrement, un feu de direction de télécommande sans fil de vélo à visser des deux côtés de la poignée.

La demande de brevet AU2009202824 décrit un Ensemble de rétroviseurs pour véhicule de transport à roue avant unique, comprenant deux parties de serrage un rétroviseur muni d'une lampe de clignotant, et une extrémité du rétroviseur est reliée à la partie de serrage; un tuyau flexible, et un contrôleur, le contrôleur contrôlant le clignotement du clignotant.

La demande de brevet ITRA20110026A1 décrit une autre solution de signalisation lumineuse et sonore de changement de direction, de freinage, de danger et de feux avant et arrière pour bicyclettes et similaires.

La demande de brevet WO2010123194 décrit un dispositif d'indication de direction pour vélo pouvant se fixer à la selle ou à un sac à dos. Ce dispositif comprend un module fonctionnel et un module de commande. Le module fonctionnel est constitué d'un boîtier qui comporte une fenêtre et une alimentation électrique, une première carte de circuit imprimé comprenant un dispositif à lampes, une cellule photovoltaïque et un capteur de vitesse, une pile rechargeable et un cache arrière.

La demande JPS53149580 décrit une autre solution connue.

### Inconvénient de l'art antérieur

Un premier inconvénient est que lorsque la poignée comporte une source lumineuse pour indiquer l'intention d'un changement de direction, il est nécessaire que cette source déborde suffisamment du guidon pour être visible d'un conducteur circulant à l'arrière de l'engin et éviter le masquage par le cycliste. Par contre, cela conduit à un encombrement préjudiciable à l'arrêt et peut susciter des tentatives de dégradation par arrachage.

Un second inconvénient des solutions de l'art antérieur provient de l'apparition sur les voies de circulation ouvertes de véhicules à conduite autonome, dans lequel l'observation du conducteur n'est plus systématique. La détection de bicyclettes, trottinettes et autres engins de mobilité urbaine est assurée par différents capteurs des véhicules autonomes (lidar, caméra), mais leur interprétation par les automates de conduite est délicate en raison des changements de trajectoires potentiellement brusques (pour éviter un nid de poule, par étourderie, ...) et difficilement prévisibles.

### Solution apportée par l'invention

Afin de répondre à ces inconvénients l'invention concerne selon son acception la plus générale une poignée de sécurité apte à être adaptée sur le guidon d'un équipement mobile ou intégré au guidon, conforme à la revendication 1.

Elle comporte une partie escamotable entre une position où une extrémité équipée d'une source de signalisation lumineuse dépasse de la surface frontale du guidon et une position dans laquelle ladite extrémité est engagée dans le guidon et en outre un module de communication radiofréquence et un circuit électronique pour commander ledit module de communication par un signal de changement de direction.

On entend par « position escamotée » la position où la plus grande partie de la partie mobile est engagée à l'intérieur de la cavité creuse du guidon, par opposition à la position où la plus grande partie de la partie mobile déborde de l'extrémité ouverte de la cavité creuse formée dans le guidon.

### Description détaillée de l'invention

La présente invention sera mieux comprise à la lecture de la description qui suit, concernant des exemples non limitatifs de réalisation illustrés par les dessins annexés où :
- La figure 1 représente un exemple du schéma de principe des circuits électroniques d'une poignée selon l'invention.
- La figure 2 représente un exemple de réalisation d'une poignée rétractable bistable en position rétractée.
- La figure 3 représente un exemple de réalisation d'une poignée rétractable bistable en basculement vers la position escamotée.
- La figure 4 représente un exemple de réalisation d'une poignée rétractable bistable en position escamotée.
- La figure 5 représente un exemple de réalisation d'une poignée rétractable bistable en basculement vers la position rétractée.

### Schéma de principe

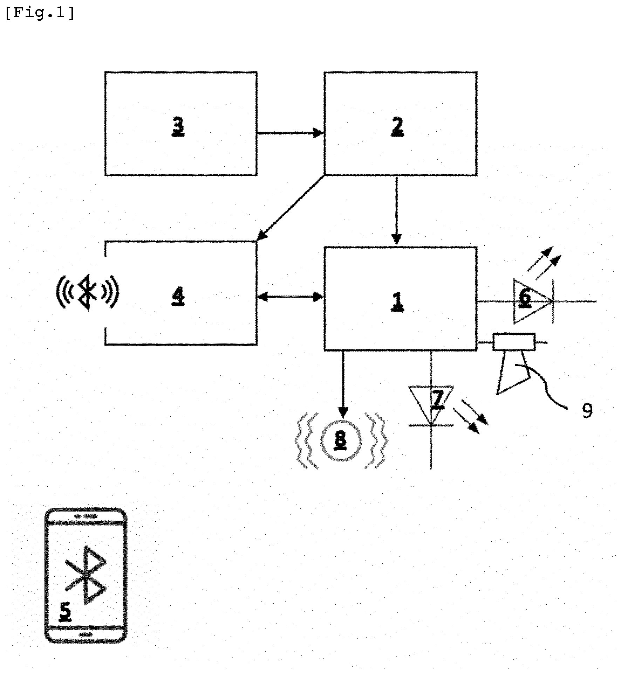

La figure 1 représente un schéma de principe d'une poignée selon un exemple non limitatif de réalisation de l'invention.

Un circuit électronique (1) est logé dans la poignée. Il est alimenté dans l'exemple décrit par un super-condensateur (2) relié à un générateur électrique par récupération d'énergie (3), par exemple :
- un générateur électromagnétique avec système suspendu tel que décrit dans l'article « Mitcheson P.D., Green T.C., Yeatman E.M., Holmes A.S., "Architectures for vibration-driven micropower generators", IEEE/ASME J. Microelectromechanical Systems 13(3), (2004), 429-440. »,
- ou un générateur équipé d'une masselotte mobile tel que décrit par exemple dans l'article « He C., Kiziroglou M.E., Yates D.C., Yeatman E.M., "A MEMS self-powered sensor and RF transmission platform for WSN nodes", IEEE Sensors Journal, 11(12), (2011), 3437-3445. »,
- ou un générateur électrostatique tel que décrit dans l'exemple « Miao P., Mitcheson P.D., Holmes A.S., Yeatman E.M., Green T.C., Stark B.H., "MEMS inertial power generators for biomédical applications", Microsystem Technologies, 12, (2006), 1079-1083. »,
ou un générateur piézo-électrique décrit par exemple dans l'article « P. Pillatsch, E.M. Yeatman and A.S. Holmes, "Real World Testing Of A Piezoelectric Rotational Energy Harvester for Human Motion", PowerMEMS 2013, London, Dec 3-6, 2013. » ou «H. Jiang, M. Kiziroglou, D.C. Yates and E.M. Yeatman, "A Non-harmonic Motion-powered Piezoelectric FM Wireless Sensing System", Transducers 2015, Anchorage, June 21-25 ».

Ces dispositifs intégrés dans la poignée récupèrent l'énergie vibrationnelle à laquelle est soumise le guidon et permettent d'assurer une permanence du service, sans nécessiter de maintenance, remplacement de pile ou recharge de batterie. Bien entendu, une alimentation classique par batterie ou pile peut également être envisagée, éventuellement associée à une cellule photovoltaïque.

Un module de communication (4) est piloté par le circuit électronique (1). Ce module de communication est dans l'exemple décrit appairé avec un téléphone intelligent (5) (en anglais « smartphone »).

Il commande le fonctionnement d'une ou plusieurs LED (6) destinées à être vues par les tiers, une ou plusieurs LED (7) destinées à être vues par l'utilisateur de l'engin, et un vibreur (8) transmettant des informations haptiques par le revêtement de la poignée.

Le téléphone intelligent peut servir à l'exécution d'un programme de guidage de type « Google Maps » ou « Waze » (noms commerciaux) et à la transmission via le module de communication (4), par protocole Bluetooth low energy (BLE) par exemple les informations qui sont traitées par le circuit électronique (1) pour commander l'activation du vibreur (8), des Leds (7) pour signaler au pilote l'imminence d'un changement de direction et aux leds (6) pour commander l'activation des indicateurs lumineux prévenant les autres véhicules d'un prochain changement de direction. Cette information peut aussi être transmise à un réseau de systèmes d'aide à la conduite de véhicules pour compléter les données provenant de capteurs du véhicule et participer à la fusion des données pour les fonctions de régulation de vitesse ou de freinage d'urgence du véhicule.

Le téléphone intelligent appairé à la poignée permet d'utiliser les composants et fonctionnalités nativement présentes dans la plupart des téléphones actuels, et donc d'éviter de répliquer ces composants et fonctionnalités dans la poignée.

La géolocalisation de la poignée peut être assurée par les moyens de géolocalisation du téléphone intelligent appairé à la poignée via la communication Bluetooth BLE de courte portée, ainsi que la transmission à un serveur des informations de position de la poignée. De même, l'application de navigation peut être exécutée sur le téléphone intelligent et les informations de changement de direction transmises à la poignée via la communication de courte portée.

La poignée comporte optionnellement un générateur sonore (9) commandé par le circuit électronique (1) en fonction des changements de vitesse et éventuellement des détections de proximité d'un véhicule communicant.

Le circuit électronique (1) peut commander les moyens de signalisation optiques, sonores, et émission de signaux radiofréquences de manière à créer une bulle de sécurité autour de l'engin mobile, par la sélection des moyens d'avertissement appropriés en fonction de l'environnement du véhicule, de sa localisation, des conditions météorologiques et de sa vitesse de circulation connus par les informations transmises par le téléphone intelligent pour améliorer les capacités de détection par les autres usagers de la route.

### Construction mécanique de la poignée

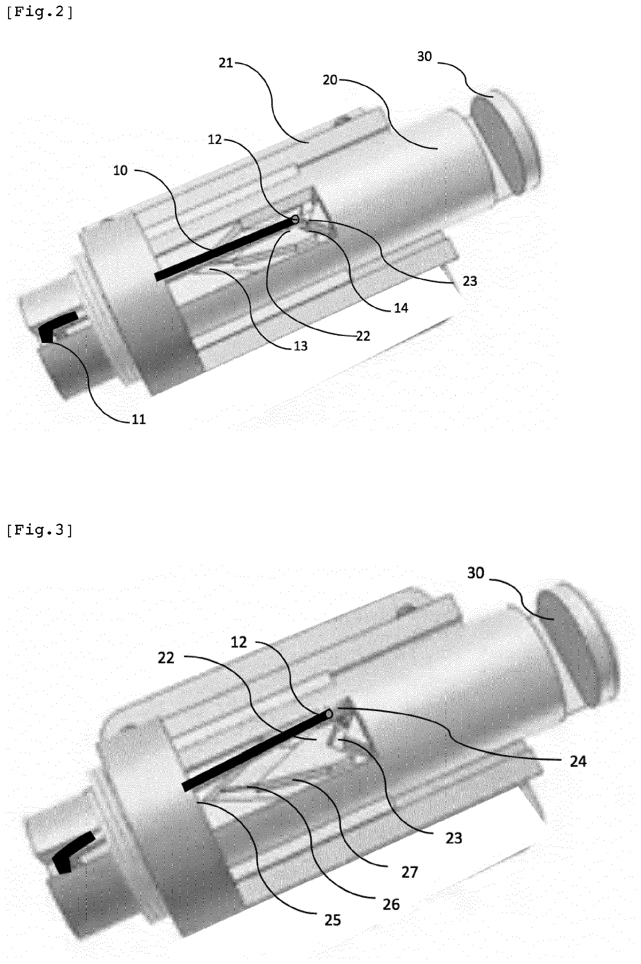

Les figures 2 à 5 illustrent un exemple de réalisation de poignée pouvant être alternativement rétractées ou déployées par une brève pression sur l'extrémité frontale de la poignée.

A cet effet, la poignée contient un mécanisme bistable mettant en œuvre une came (10) basculante articulée à son extrémité arrière (11) par un pivot transversal, et dont l'extrémité avant présente une tête en « T » (12) guidée dans un chemin présentant un « V » avant (14) et un « V » arrière (13), chacun des segments en forme de « V » présentant une encoche médiane.

La figure 2 représente la situation où le manchon (20) de la poignée est rétracté, c'est-à-dire rangé à l'intérieur du fourreau (21) engagé dans le guidon.

L'extrémité avant (12) de la came est retenue par le fond (22) de la pointe du « V » avant (14) et maintien donc le manchon (20) en position rétractée.

Lorsqu'on exerce un nouvel appui sur l'extrémité frontale du manchon (20), la pointe (23), légèrement décalée par rapport au fond (22) de la pointe du « V » avant (14), repousse la tête en « T » (12) dans une section de chemin de guidage correspondant à l'une des branches du « V », reliant le sommet (24) à la pointe (25) du « V » arrière (13). (voir figure 3).

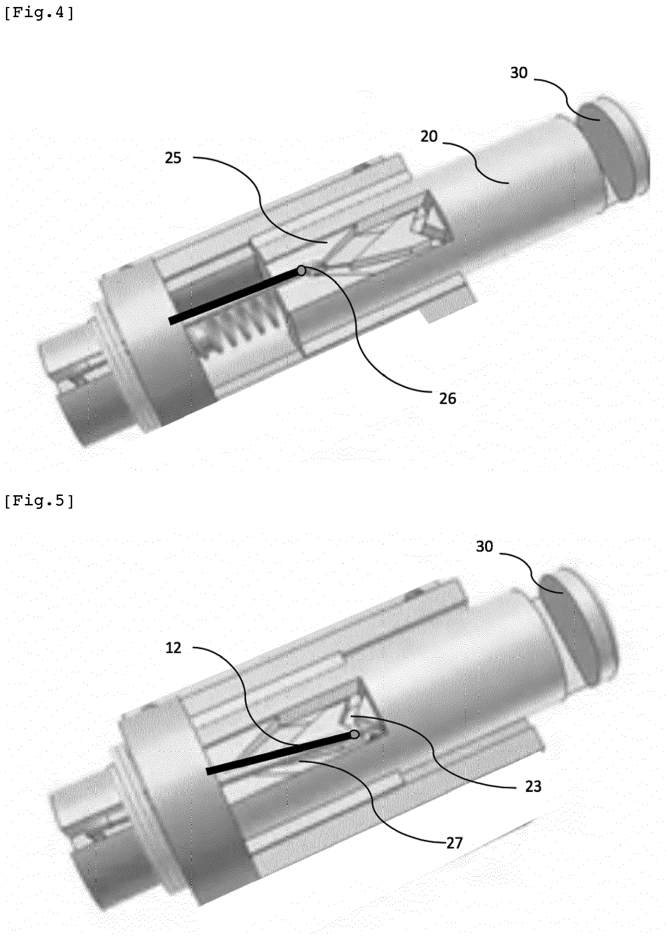

En relâchant l'appui sur l'extrémité frontale du manchon (20), un ressort (non représenté) repousse le manchon (20) et la tête en « T » (12) coulisse dans la branche (25) jusqu'à venir en butée contre la pointe (25) du « V » arrière (13). Le manchon (20) est alors complètement escamoté comme représenté en figure 4.

Lorsqu'on exerce un nouvel appui sur l'extrémité frontale du manchon (20), la pointe (26), légèrement décalée latéralement par rapport au fond de la pointe (25) du « V » arrière, conduit la tête en « T » (12) dans la deuxième branche (27), ce qui permet de repousser le manchon (20) pour l'enfoncer dans son fourreau jusqu'en position rétractée illustrée par la figure 5. En relâchant la pression, la tête en « T » (12) revient se loger dans le fond du « V » avant comme illustré par la figure 2.

Ce mécanisme permet de manière intuitive et robuste le basculement entre une position où le manchon (20) est protégé par le fourreau (21) engagé dans le guidon, et une position escamotée où elle déborde du guidon.

Le manchon (20) contient le circuit électronique et l'antenne du module radiofréquence est logée dans une partie avant (30) en matière plastique partiellement transparente pour permettre l'éclairage par les LEDS.

Alternativement, le manchon (20) peut être motorisé, un actionneur assurant le déplacement par rapport au fourreau (21), par exemple lors de la mise en marche d'un engin motorisé ou d'une clé de déverrouillage de type NFC - RFID infrarouge pour une commande à distance.

Optionnellement, la poignée est munie d'un contacteur permettant à l'utilisateur de commander manuellement l'allumage des leds pour signaler son changement de direction à un tiers.

Le téléphone intelligent de l'usager, ou un équipement de navigation est connecté avec les clignotants et (ou) les poignées afin de commander l'activation des moyens de signalisation de changement de direction lumineux et le cas échéant d'émission d'un signal radiofréquence :
- A un tiers par un signal lumineux à gauche ou à droite (clignotant). Ce signal est débrayable au niveau du commutateur.
- A l'usager par une manifestation visuelle ou sensorielle : signal lumineux à l'intérieur de chaque poignée (par l'intermédiaire de led) et / ou vibration (sur la poignée), qui s'intensifie ou s'accélère à l'approche du changement de direction et qui vibre plusieurs fois en fonction de la direction à prendre à un croisement.

L'indication du changement de direction concernée informe de la distance à parcourir et de la direction à prendre.

Les signaux lumineux ou haptiques peuvent être codés, par exemple en fonction de la distance à parcourir avant de changer de direction (Gauche ou Droite). Les distances peuvent changer, être paramétrées en fonction du véhicule utilisé. Par exemple :
- Une seule led s'allume ou clignote lorsque l'application de navigation signale un changement dans 100 m
- trois leds s'allument ou clignotent lorsque l'application de navigation signale un changement dans 50 m
- cinq leds s'allument ou clignotent lorsque l'application de navigation signale un changement imminent.

Pour un vibreur :
- Une vibration courte et douce lorsque l'application de navigation signale un changement dans 100 m
- Une vibration moyenne et douce lorsque l'application de navigation signale un changement dans 50 m
- Une vibration forte et longue lorsque l'application de navigation signale un changement imminent.

Pour un système sonore :
- Un son court et doux lorsque l'application de navigation signale un changement dans 100 m
- Un son moyennement long et doux lorsque l'application de navigation signale un changement dans 50 m
- Un son long et fort lorsque l'application de navigation signale un changement imminent.

Exemple d'informations pour le changement de direction à un carrefour : le nombre de clignotements de la LED ou de vibrations brèves du vibreur indique le quantième de la rue à prendre.

Selon une autre option, la poignée contient un accéléromètre dont les signaux sont traités par le circuit électronique (1) pour commander l'activation des moyens de signalisation et détecter les chutes pour commander l'émission d'un signal d'alerte.

En cas de chute ou de collision (mesure d'un arrêt brutal par un accéléromètre - situé dans les poignées ou ailleurs sur le véhicule ou sur l'usager (montre - veste - casque...) et si l'usager n'a pas repris la main sur les poignées au bout de X secondes, alors, les signalisations clignotent, de plus au bout de Y secondes supplémentaires un message d'interrogation s'affiche sur le Smartphone et le display s'il n'y a pas d'action - réponse de l'usager concerné, alors un envoi de message ou appel est réalisé par le téléphone intelligent et le communique à un service de secours.

Selon une autre option, le système émetteur forme une demi-sphère de sécurité active connectée et communicante.

En fonction du lieu et de la situation (campagne - milieu urbain, intempéries de type pluie, neige, verglas ; où la vitesse de déplacement des voitures et autres véhicules de type camion, autobus, tracteur, etc... est différente), en fonction de la vitesse et du déplacement de l'usager (algorithme permettant de déterminer le chemin qu'il va suivre et permettant d'identifier s'il est à vélo, à pied en train de courir, sur une trottinette...), de ses données physiologiques (âges, tailles, poids) l'emprise de la demi-sphère et la technologie de signal utilisée seront différentes. Il en sera de même si le système est sur le véhicule ; ses caractéristiques, dimension poids, vitesse seront transmises. La dimension de la demi-sphère et les signaux envoyés s'adapteront à la situation ; elle pourra donc être ovoïde en longueur (pour éviter un chevauchement intempestif en ville) ou ronde... Elle couvre l'usager et le véhicule en hauteur ce qui lui permet de communiquer avec les drones.

Ex : en ville il faut 3 m à une voiture pour s'arrêter alors qu'elle roule à 30km. Ce n'est pas la même chose sur une route de campagne ou en cas de pluie, neige, verglas. La dimension de la demi-sphère s'adaptera. De même en raison de la vitesse d'un autre véhicule (voiture - moto, camion, tracteur), le signal utilisé ne peut être le même : en ville BLE et Enocean, à la campagne, LTE, NB-ioT. La demi-sphère se comporte en caméléon et elle communique avec les autres usagers et les autres véhicules des informations sur son déplacement. Elle est aussi réceptrice d'informations.

Plus généralement, la poignée selon l'invention est configurée pour permettre les échanges d'informations avec une infrastructure de gestion de l'espace de transport, notamment avec des éléments et/ou matériels fixes ou mobiles, des appareils, bornes, puces équipements des engins ou des matériels, assurant le partage et le relai des informations entre les véhicules, et les usagers d'une part et le vélo/trottinette (etc..) muni de poignées communicantes d'autre part.

### Verrouillage

Optionnellement, la poignée comporte un moyen de verrouillage, par exemple électromagnétique, maintenant la partie escamotable en position escamotée, pour éviter des manipulations inopinées. En position de verrouillage, le guidon peut également être verrouillé par un verrou électromagnétique, ou mis en rotation libre par un moyen de libération de la liaison entre le guidon et l'axe commandant l'orientation des roues.

## Revendications

1. Poignée de sécurité apte à être adaptée sur un guidon d'un équipement mobile comportant au moins un moyen de signalisation, ladite poignée comportant une partie escamotable entre une position où une extrémité équipée d'une source de signalisation lumineuse dépasse de la surface frontale du guidon et une position escamotée, **caractérisée en ce que** ladite source de signalisation lumineuse est commandée par un module de communication radiofréquence (4) et un circuit électronique (1) logé dans ladite poignée pour commander ledit module de communication (4) par un signal de changement de direction.

2. Poignée de sécurité selon la revendication 1 **caractérisée en ce que** ledit module de communication (4) est configuré pour échanger des données avec un téléphone intelligent (5).

3. Poignée de sécurité selon la revendication 1 **caractérisée en ce que** ledit module de communication (4) est configuré pour échanger des données avec une infrastructure de gestion du réseau routier.

4. Poignée de sécurité selon la revendication 1 **caractérisée en ce qu'**elle comporte un moyen de collecte d'énergie (3) alimentant ledit circuit électronique (1) et ledit module de communication (2).

5. Poignée de sécurité selon la revendication précédente **caractérisée en ce que** ledit moyen de collecte d'énergie est un générateur piézoélectrique ou un générateur électromagnétique.

6. Poignée de sécurité selon la revendication précédente **caractérisée en ce qu'**elle comprend un actionneur commandant le déplacement de ladite partie escamotable.

7. Poignée de sécurité selon la revendication 1 **caractérisée en ce qu'**elle comporte une zone superficielle haptique commandée par le circuit électronique en fonction d'informations de changement de direction provenant d'une application de navigation exécutée par le circuit électronique ou par un téléphone intelligent communicant avec le module de radiocommunication.

8. Poignée de sécurité selon la revendication 1 **caractérisée en ce qu'**elle comporte un capteur gyroscopique délivrant un signal commandant l'activation dudit moyen de signalisation par l'intermédiaire dudit circuit électronique.

9. Guidon comprenant une poignée de sécurité selon l'une quelconque des revendications précédentes **caractérisé en ce qu'**elle comporte un moyen de verrouillage de ladite partie escamotable dans la position escamotée.

## Patentansprüche

1. Sicherheitsgriff, der geeignet ist, um an einen Lenker einer mobilen Ausrüstung angepasst zu werden, der mindestens ein Signalisierungsmittel aufweist, wobei der Griff einen Teil aufweist, der zwischen einer Position, an der ein Ende, das mit einer Lichtsignalisierungsquelle ausgestattet ist, über die vordere Oberfläche des Lenkers hinausragt, und einer eingezogenen Position einziehbar ist, **dadurch gekennzeichnet, dass** die Lichtsignalisierungsquelle durch ein Funkfrequenzkommunikationsmodul (4) und eine elektronische Schaltung (1) gesteuert wird, die in dem Griff zum Steuern des Kommunikationsmoduls (4) durch ein Richtungsänderungssignal untergebracht ist.

2. Sicherheitsgriff nach Anspruch 1, **dadurch gekennzeichnet, dass** das Kommunikationsmodul (4) zum Austauschen von Daten mit einem Smartphone (5) konfiguriert ist.

3. Sicherheitsgriff nach Anspruch 1, **dadurch gekennzeichnet, dass** das Kommunikationsmodul (4) zum Austauschen von Daten mit einer Verwaltungsinfrastruktur des Straßennetzes konfiguriert ist.

4. Sicherheitsgriff nach Anspruch 1, **dadurch gekennzeichnet, dass** er ein Energiesammelmittel (3) umfasst, das die elektronische Schaltung (1) und das Kommunikationsmodul (2) mit Strom versorgt.

5. Sicherheitsgriff nach dem vorstehenden Anspruch,
**dadurch gekennzeichnet, dass** das Energiesammelmittel ein piezoelektrischer Generator oder ein elektromagnetischer Generator ist.

6. Sicherheitsgriff nach dem vorstehenden Anspruch,
**dadurch gekennzeichnet, dass** er ein Betätigungselement umfasst, das die Bewegung des einziehbaren Teils steuert.

7. Sicherheitsgriff nach Anspruch 1, **dadurch gekennzeichnet, dass** er einen haptischen Oberflächenbereich aufweist, der durch die elektronische Schaltung in Abhängigkeit von Informationen über die Richtungsänderung von einer Navigationsanwendung gesteuert wird, die durch die elektronische Schaltung oder durch ein Smartphone ausgeführt wird, das mit dem Funkkommunikationsmodul kommuniziert.

8. Sicherheitsgriff nach Anspruch 1, **dadurch gekennzeichnet, dass** er einen Gyroskopsensor aufweist, der ein Signal abgibt, das die Aktivierung des Signalisierungsmittels über die elektronische Schaltung steuert.

9. Lenker, umfassend einen Sicherheitsgriff nach einem der vorstehenden Ansprüche, **dadurch gekennzeichnet, dass** er ein Verriegelungsmittel des einziehbaren Teils in der eingezogenen Position aufweist.

## Claims

1. Safety handle designed to be fitted to a handlebar of an item of mobile equipment, comprising at least one signaling means, said handle having a part which is stowable between a position in which one end equipped with a light signaling source protrudes from the front surface of the handlebar and a stowed position, **characterized in that** said light signaling source is controlled by a radiofrequency communication module (4) and an electronic circuit (1), housed inside said handle, for controlling said communication module (4) by a signal of a change of direction.

2. Safety handle according to claim 1, **characterized in that** said communication module (4) is configured to exchange data with a smartphone (5).

3. Safety handle according to claim 1, **characterized in that** said communication module (4) is configured to exchange data with a road network management infrastructure.

4. Safety handle according to claim 1, **characterized in that** it comprises an energy collection means (3) supplying said electronic circuit (1) and said communication module (2).

5. Safety handle according to the preceding claim, **characterized in that** said energy collection means is a piezoelectric generator or an electromagnetic generator.

6. Safety handle according to the preceding claim, **characterized in that** it comprises an actuator controlling the movement of said stowable part.

7. Safety handle according to claim 1, **characterized in that** it comprises a haptic surface area controlled by the electronic circuit as a function of change of direction information coming from a navigation application run by the electronic circuit or by a smartphone communicating with the radiocommunication module.

8. Safety handle according to claim 1, **characterized in that** it comprises a gyroscopic sensor delivering a signal controlling the activation of said signaling means via said electronic circuit.

9. Handlebar comprising a safety handle according to any of the preceding claims, **characterized in that** it comprises a means for locking said stowable part in the stowed position.
